# EUROPÄISCHE PATENTANMELDUNG

(11) **EP 1 113 618 A2**
(43) Veröffentlichungstag der Anmeldung: **04.07.2001**
(21) Anmeldenummer: 00125599.1
(22) Anmeldetag: 22.11.2000
(51) Int. Cl.: H04L 9/32

(54) **Sicherung von Sensordaten**

(30) Priorität: 27.12.1999 DE 19963329
(71) Anmelder: SIEMENS AKTIENGESELLSCHAFT, 80333 München (DE)
(72) Erfinder: Markwitz, Wernhard, Dr., 80469 München (DE)

(57) **Zusammenfassung**

Die Erfindung betrifft ein Sensormodul mit einem Sensor zur Erfassung von Verbrauchsdaten oder von Merkmalsdaten, insbesondere von biometrischen Merkmalen. Erfindungsgemäß sind integrierte Mittel zur Sicherung der Daten bei einer Datenausgabe vorgesehen.

## Beschreibung

Die Erfindung betrifft einen Sensormodul zur Erfassung von Daten gemäß dem Oberbegriff des Patentanspruchs 1.

Unter diesen Daten sind vorzugsweise Verbrauchsdaten und Merkmalsdaten zu verstehen. Verbrauchsdaten sind beispielsweise Zählerstände von Gas-, Strom-, Wasserzählern oder auch Gesprächsgebühren von Telefonapparaten. Merkmalsdaten, insbesondere von biometrischen Merkmalen, sind beispielsweise die Fingerlinien, die über einen sogenannten Fingertip-Sensor erfasst und ausgewertet werden können. Weitere biometrische Merkmale können von der Iris des Auges, der Sprache einer Person oder auch von der Haut des Menschen abgeleitet werden.

Die Daten eines Sensormoduls werden derzeit in Geräten und Systemen in der Regel ohne spezielle Sicherheitsmaßnahmen verteilt. Dadurch ist ein Missbrauch durch relativ einfache Manipulationen am Endgerät möglich, wie zum Beispiel durch sogenannte "play back Attacken". Die starke Verbreitung, beispielsweise von Fingertip-Sensorsystemen bei jedem Personalcomputer, und die Vernetzung über das unsichere Internet, sowie die Kenntnis fehlender Vorkehrungen zur Aufklärung, setzen die Hemmschwelle für einen Missbrauch erheblich herab.

In einigen Fällen sind Maßnahmen zur Aufklärung eines Missbrauchs getroffen, wie beispielsweise die Verplombung von Strom-, Wasser- und Gaszählern, sowie eine regelmäßige Kontrolle durch Eichung und Ablesung. Eine weitere Erschwerung einer Manipulation besteht in den verwendeten Datenformaten und Übertragungsprotokollen.

Der Erfindung liegt die Aufgabe zugrunde, eine vertrauenswürdige Kommunikationsbeziehung von Sensormodulen zu Zentralen zu ermöglichen, die die übertragenen Daten verarbeiten und auswerten.

Diese Aufgabe wird erfindungsgemäß durch die im Patentanspruch 1 angegebenen Merkmale gelöst.

Der erfindungsgemäße Sensormodul ermöglicht eine Authentifizierung des Sensors selbst. Hierzu weist der Sensormodul beispielsweise auf dem Sensorchip oder im Sensorgehäuse integrierte Sicherungsmittel auf.

Der erfindungsgemäße Sensormodul ermöglicht ein Verfahren zur Sicherung von Sensordaten, wobei der Ursprung und die Unversehrtheit der Daten nachgeprüft werden können. Dabei werden die Existenz des Sensors und die Unversehrtheit der Daten mittels kryptographischer Verfahren und Protokolle nachgewiesen, die in einer Tamperproof Einheit mit dem Sensor gebildet werden.

Im Folgenden wird die Erfindung anhand eines Ausführungsbeispiels beschrieben.

Die Erfindung geht aus von einem Sensormodul mit einem Sensor zur Erfassung von Daten.

Der Sensormodul kann beispielsweise durch einen Strom- oder Wasserzähler realisiert sein. Bei der Erfassung von biometrischen Merkmalen enthält der Sensormodul beispielsweise den schon eingangs erwähnten Fingertip-Sensor zur Aufnahme von Fingerlinien. Die erfassten Daten sind beispielsweise Verbrauchsdaten, wie beim Strom- oder Wasserzähler, oder Merkmalsdaten, wie beim Fingertip-Sensor.

Erfindungsgemäß enthält der Sensormodul integrierte Mittel zur Sicherung der Daten bei einer Datenausgabe. Die Integration der Sicherungsmittel kann durch ein speziell geschütztes Sensormodul, wie ein sogenanntes Tamper-Proof-Modul mit oder ohne Smart Card als sicheren Schlüsselspeicher mit Kryptofunktionen, realisiert sein. Wenn der Sensor selbst durch einen integrierten Schaltkreis realisiert ist, oder zumindest mit einer solchen Technik hergestellt wird, so sind die Sicherungsmittel ebenfalls auf diesem Chip integriert.

Für die Erfindung ist es wesentlich, dass die von dem Sensor gelieferten Daten, zumindest nach ihrer rechnerischen Erzeugung, von aussen nicht abgegriffen und verfälscht werden können.

Die Mittel zur Sicherung der Daten ermöglichen eine abgestufte Sicherungsstrategie.

Über die Mittel ist in einem ersten Schritt eine Authentifizierung des Sensors möglich. Die Sicherungsmittel enthalten beispielsweise neben einer festen Sensorfabrikationsnummer zusätzlich entweder eine variable Laufnummer und/oder eine Datum/Uhrzeit-Angabe und/oder eine (ebenfalls variable) Zufallszahl, die den zu signierenden Daten angefügt und mit ihnen signiert wird. Anhand des erhaltenen Zertifikats und des verwendeten Protokolls beziehungsweise Auswerteverfahrens kann eine Zentrale die Richtigkeit und die Einmaligkeit der Daten überprüfen.

Bei der Überprüfung wird beispielsweise in einem ersten Schritt die Authentifikation der Kommunikationspartner mit einem Zertifikatsaustausch oder einem Challenge and Response-Protokoll durchgeführt.

Bei einem weiteren Schritt werden die vom Sensor gelieferten Daten signiert. Hierbei erfolgt wiederum eine Überprüfung des erstellten Zertifikats in der die Daten ablesenden Zentrale.

Zur Erzeugung der Sensor-Signatur wird beispielsweise ein Hash-Wert gebildet, der mit einem geheimen Schlüssel des Sensors verschlüsselt wird. Bei der Überprüfung verwendet die Zentrale den öffentlichen Schlüssel des Sensors. Der öffentliche und der geheime Schlüssel sind beispielsweise Teile des sogenannten "Public-Key-Systems". Die hierzu verwendeten Verschlüsselungs- und Authentifizierungsmaßnahmen sind allgemein bekannt und für die Erfindung selbst von untergeordneter Bedeutung.

Bei einer Weiterbildung der Erfindung werden die übertragenen Daten verschlüsselt. Weiter ist bei Bedarf eine Fehlersicherung möglich.

## Patentansprüche

1. Sensormodul mit einem Sensor zur Erfassung von Verbrauchsdaten oder von Merkmalsdaten, insbesondere von biometrischen Merkmalen,
**gekennzeichnet durch**
integrierte Mittel zur Sicherung der Daten bei einer Datenausgabe.

2. Sensormodul nach Anspruch 1,
**durch gekennzeichnet**, dass
die Mittel eine Authentifizierung des Sensors ermöglichen.

3. Sensormodul nach Anspruch 1 oder 2,
**durch gekennzeichnet**, dass
die Mittel zur Signierung der Daten dienen.

4. Sensormodul nach einem der Ansprüche 1 bis 3,
**durch gekennzeichnet**, dass
die Daten in den Mitteln verschlüsselt werden.
